# EUROPEAN PATENT APPLICATION

(11) **EP 4 725 883 A1**
(43) Date of publication of application: **15.04.2026**
(21) Application number: 25201535.9
(22) Date of filing: 11.09.2025
(51) Int. Cl.: B65H 54/52

(54) **YARN WINDER**

(30) Priority: 11.10.2024 JP 2024179225
(71) Applicant: TMT Machinery, Inc., Osaka-shi, Osaka 541-0041 (JP)
(72) Inventor: TANAKA, Shunya, Kyoto-shi, Kyoto, 612-8686 (JP); ARAKI, Shumpei, Kyoto-shi, Kyoto, 612-8686 (JP); KOBAYASHI, Shuhei, Kyoto-shi, Kyoto, 612-8686 (JP)
(74) Representative: Hoffmann Eitle

(57) **Abstract**

An object of the present invention is to cool a motor while wasteful electric power consumption is suppressed.

The following components are provided: a contact roller motor 32 configured to rotationally drive a contact roller; an inverter 32a configured to adjust the rotation speed of the contact roller motor 32; a fan configured to send cooling wind to the contact roller motor 32; a fan motor 33 configured to rotationally drive the fan; an inverter 33a configured to adjust the rotation speed of the fan motor 33; an input unit 27 into which the winding speed of winding a yarn Y can be input; and a controller 29. When the yarn Y is wound, the controller 29 controls the inverter 32a based on the winding speed of winding the yarn Y so as to control the rotation speed of the contact roller and controls the inverter 33a based on the winding speed of winding the yarn Y so as to control the rotation speed of the fan. In this regard, the winding speed of winding the yarn Y is input into the input unit 27.

## Description

### BACKGROUND OF THE INVENTION

The present invention relates to a yarn winder configured to wind a yarn onto a bobbin.

Patent Literature 1 (Japanese Laid-Open Patent Publication No. 2024-038600) discloses a yarn winder configured to wind yarns onto bobbins attached to a bobbin holder, so as to form packages. Such a yarn winder includes: a contact roller which is able to make contact with the packages; and a contact roller motor configured to rotationally drive the contact roller. The contact roller is configured to rotate while applying a contact pressure to an outer circumferential surface of each package, so as to adjust the shape of the package.

### SUMMARY OF THE INVENTION

For a space reason, it is difficult to use a large motor as a contact roller motor in the above-described yarn winder. Therefore, a roller with a relatively small diameter is used as the contact roller to achieve weight reduction so that the load on the contact roller motor is not high. However, when the diameter of the contact roller is small, the rotation speed (rotation frequency) of the contact roller needs to be large, with the result that the load on the contact roller motor is still high. As such, because the contact roller motor is under high load, an amount of heat generated at the contact roller motor is large. This leads to early breakage of an inner component such as a coupling, due to the heat.

The inventors of the subject application considered to provide a fan for cooling the contact roller motor. An amount of heat generated at the contact roller motor changes depending on the rotation speed of the contact roller. That is, the necessary air volume of the fan for cooling the contact roller motor also changes depending on the rotation speed of the contact roller. When the air volume of the fan is too large, electric power is wastefully consumed. When the air volume of the fan is too small, the contact roller motor is not preferably cooled.

An object of the present invention is to provide a yarn winder configured to preferably cool a contact roller motor while wasteful electric power consumption is suppressed.

According to a first aspect of the invention, a yarn winder is configured to wind a yarn onto a bobbin so as to form a package and comprises: a bobbin holder to which the bobbin is attached; a contact roller configured to apply a contact pressure to an outer circumferential surface of the package; a contact roller motor configured to rotationally drive the contact roller; a first rotation speed adjuster configured to adjust the rotation speed of the contact roller motor; a fan configured to send cooling wind to the contact roller motor; a fan motor configured to rotationally drive the fan; a second rotation speed adjuster configured to adjust the rotation speed of the fan motor; an input unit into which the winding speed of winding the yarn is able to be input; and a controller. The controller is configured to perform: a first process of controlling the rotation speed of the contact roller by controlling the first rotation speed adjuster based on the winding speed of winding the yarn in the winding of the yarn, the winding speed of winding the yarn being input into the input unit; and a second process of controlling the rotation speed of the fan by controlling the second rotation speed adjuster based on the winding speed of winding the yarn, the winding speed of winding the yarn being input into the input unit.

According to this aspect, when the yarn is wound, the controller controls the rotation speed of the contact roller based on the winding speed of winding the yarn input into the input unit. That is, the rotation speed of the contact roller depends on the winding speed of winding the yarn, and an amount of heat generated at the contact roller motor changes depending on the winding speed of winding the yarn. Furthermore, the controller controls the rotation speed of the fan based on the winding speed of winding the yarn input into the input unit. It is therefore possible to appropriately control the rotation speed (air volume) of the fan in consideration of the winding speed of winding the yarn, which relates to the amount of the heat generated at the contact roller motor. As a result, while wasteful electric power consumption is suppressed, the contact roller motor is preferably cooled.

According to a second aspect of the invention, the yarn winder of the first aspect is arranged such that the controller is configured to decide timing for starting the rotation of the fan based on timing for causing the contact roller motor to start the rotation of the contact roller.

According to this aspect, irrespective of the start of rotation of the contact roller, the wasteful electric power consumption is suppressed as compared to a case where the fan starts rotating before the contact roller starts rotating.

According to a third aspect of the invention, the yarn winder of the first or second aspect is arranged such that the controller is configured to decide timing for starting the second process based on timing for starting the first process.

This aspect makes it possible to reliably suppress heat generated at the contact roller motor in the winding of the yarn.

According to a fourth aspect of the invention, the yarn winder of any one of the first to third aspects is arranged such that the controller is configured to decide timing for stopping the rotation of the fan based on timing for causing the contact roller motor to stop the rotation of the contact roller.

According to this aspect, irrespective of the stop of rotation of the contact roller, the wasteful electric power consumption is suppressed as compared to a case where the fan still rotates even after the contact roller stops rotating.

According to a fifth aspect of the invention, the yarn winder of any one of the first to fourth aspects is arranged such that the controller is configured to perform control in the second process so that, the higher the rotation speed of the fan is, the higher the winding speed of winding the yarn is.

The higher the winding speed of winding the yarn is, the higher the rotation speed of the contact roller needs to be. The higher the rotation speed of the contact roller is, the more likely an amount of the heat generated at the contact roller motor is to be large. The higher the rotation speed of the fan is, the larger the air volume of the fan is. With this arrangement, cooling capability is enhanced. In this aspect of the invention, the larger the amount of the heat generated at the contact roller motor is, the higher the cooling capability of the fan is. As a result, while the wasteful electric power consumption is reliably suppressed, the contact roller motor is effectively cooled.

According to a sixth aspect of the invention, the yarn winder of any one of the first to fifth aspects further comprises a cover configured to at least partially cover the contact roller motor, and the fan is attached to the cover.

This aspect makes it possible to provide the fan in the vicinity of the contact roller motor so as to preferably cool the contact roller motor.

### BRIEF DESCRIPTION OF THE DRAWINGS

FIG. 1 is a profile of a take-up apparatus including a yarn winder of an embodiment.
FIG. 2 is a front view of the yarn winder.
FIG. 3 is a block diagram of an electric configuration of the yarn winder.
FIG. 4 is a graph showing an example of the relationship between the winding speed of winding a yarn and the magnitude of output (rotation speed) of a fan motor.
FIG. 5 is a graph showing the relationship between the winding speed of winding the yarn and the temperature of a contact roller motor.
FIG. 6 is a flowchart of an example of a process performed by a controller when the yarn is produced.

### DESCRIPTION OF THE PREFERRED EMBODIMENTS

### (Outline of Take-Up Apparatus)

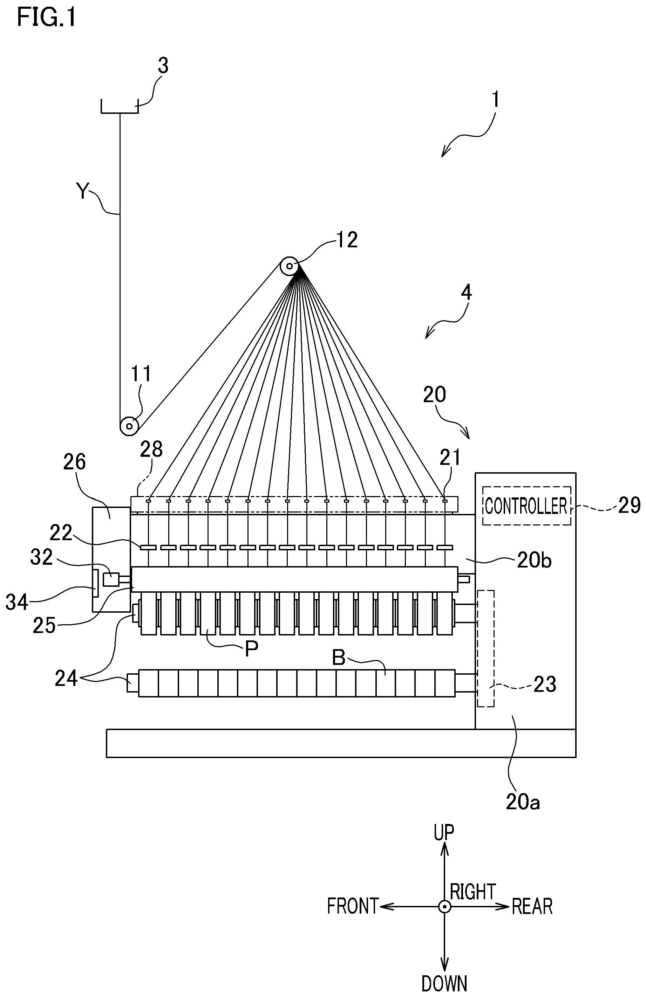

To begin with, the following will describe a take-up apparatus 1 including a yarn winder 4 of the present embodiment, with reference to FIG. 1. FIG. 1 is a profile of the take-up apparatus 1. Hereinafter, a left-right direction on the plane of FIG. 1 will be referred to as the front-rear direction, and a direction perpendicular to the plane will be referred to as the left-right direction. Furthermore, a direction orthogonal to both the front-rear direction and the left-right direction will be referred to as the up-down direction (vertical direction) in which the gravity acts. The front-rear direction and the left-right direction are substantially in parallel to a horizontal direction.

The take-up apparatus 1 is configured to take up yarns Y spun out from a spinning apparatus 3 and to wind the yarns Y onto the respective bobbins B, so as to form packages P. The spinning apparatus 3 is, e.g., configured to discharge molten polymer which is a material of the yarns Y. The material of the yarns Y is, e.g., a polyester-based material such as PET. However, the disclosure is not limited to this. Each yarn Y is, e.g., a monofilament yarn made of a single filament. However, the disclosure is not limited to this. The take-up apparatus 1 mainly includes a first godet roller 11, a second godet roller 12, and the yarn winder 4.

The first godet roller 11 is a roller having an axis substantially in parallel to the left-right direction. For example, the first godet roller 11 is provided below the spinning apparatus 3. The first godet roller 11 is provided above a front end portion of the yarn winder 4. The yarns Y are wound onto the first godet roller 11 while being aligned in the left-right direction. The first godet roller 11 is rotationally driven by a motor (not illustrated). Because of this, the first godet roller 11 feeds the yarns Y to a downstream side in a yarn running direction.

The second godet roller 12 is a roller having an axis substantially in parallel to the left-right direction. The second godet roller 12 is provided downstream of the first godet roller 11 in the yarn running direction. The second godet roller 12 is provided above and behind the first godet roller 11. The second godet roller 12 is rotationally driven by a motor (not illustrated). Because of this, the second godet roller 12 feeds the yarns Y to the downstream side in the yarn running direction.

The yarn winder 4 is configured to wind the yarns Y onto the respective bobbins B, so as to form packages P. The yarn winder 4 is provided downstream of the second godet roller 12 in the yarn running direction. The yarn winder 4 is provided below the second godet roller 12.

### (Yarn Winder)

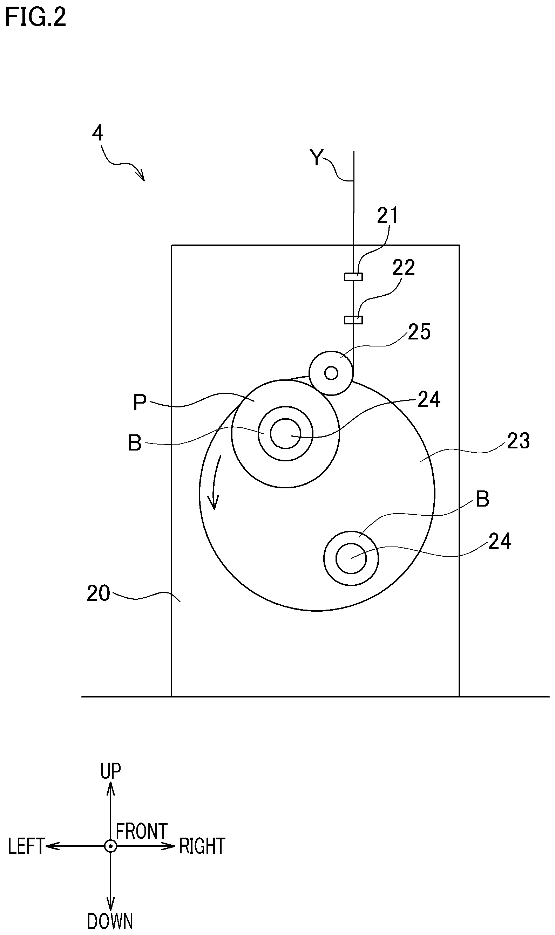

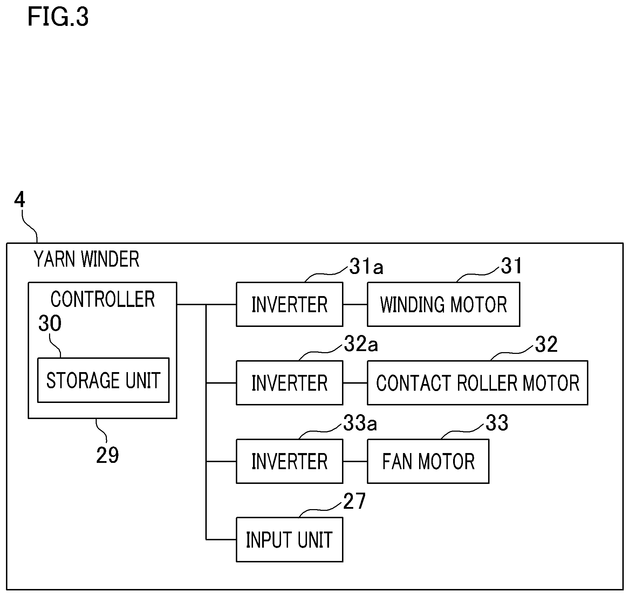

The following will describe the yarn winder 4 with reference to FIG. 2 and FIG. 3. FIG. 2 is a front view of the yarn winder 4. FIG. 2 does not illustrate a later-described front cover 26.

FIG. 3 is a block diagram of an electric configuration of the yarn winder 4.

As shown in FIG. 1 and FIG. 2, the yarn winder 4 mainly includes a base 20, fulcrum guides 21, traverse guides 22, a turret 23, two bobbin holders 24, a contact roller 25, a contact roller motor 32, a fan 34, the front cover 26, and a controller 29.

As shown in FIG. 1, the base 20 includes: a base main body portion 20a provided at a rear end portion of the yarn winder 4; and a supporting body 20b which is fixed to an upper portion of the base main body portion 20a and which extends forward. The base main body portion 20a supports the turret 23, etc. The supporting body 20b supports the contact roller 25 and the traverse guides 22.

The fulcrum guides 21 are provided for the respective yarns Y, and are aligned in the front-rear direction. The fulcrum guides 21 are attached to a guide supporting member 28 supported by the supporting body 20b. As the yarns Y are threaded onto the respective fulcrum guides 21, the fulcrum guides 21 function as fulcrums of the traversal of the respective yarns Y.

The traverse guides 22 are provided for the respective yarns Y, and are aligned in the front-rear direction. The traverse guides 22 are driven by a traverse motor (not illustrated), and are configured to reciprocate in the front-rear direction. With this arrangement, the yarns Y threaded to the traverse guides 22 are traversed about the fulcrum guides 21.

The turret 23 is a disc-shaped member having an axis substantially in parallel to the front-rear direction. The turret 23 is rotatably supported by the base main body portion 20a. The turret 23 cantilevers the two bobbin holders 24. The turret 23 is rotationally driven by a turret motor (not illustrated). The turret 23 is configured to move the two bobbin holders 24 by rotating about a rotation axis substantially in parallel to the front-rear direction. With this arrangement, the yarn winder 4 is structured so that the positions of the two bobbin holders 24 are switchable with each other. While the yarns Y are wound onto bobbins B attached to one bobbin holder 24, the replacement of bobbins B is performable for the other bobbin holder 24.

To each of the two bobbin holders 24, bobbins B are attached. Each of the two bobbin holders 24 extends forward from the turret 23. The two bobbin holders 24 are respectively and rotatably supported by the upper end portion and lower end portion of the turret 23 supported by the base main body portion 20a. In other words, the two bobbin holders 24 are cantilevered by the base main body portion 20a provided on the rear side. The axes of the two bobbin holders 24 are substantially in parallel to the front-rear direction. The leading end side (front end portion) of each bobbin holder 24 is typically a working side where operations such as the attachment of the bobbins B to the bobbin holder 24 are performed.

The bobbins B are provided for the respective yarns Y, aligned in the front-rear direction, and attached to each bobbin holder 24. The number of the bobbins B attached to one bobbin holder 24 is, e.g., 16. The two bobbin holders 24 are rotationally driven by the respective winding motors 31 (see FIG. 3).

The contact roller 25 is a roller having an axis substantially in parallel to the front-rear direction. The contact roller 25 is provided immediately above the upper bobbin holder 24. The contact roller 25 is rotatably supported by the supporting body 20b. The contact roller 25 is rotationally driven by the contact roller motor 32. When the yarns Y are wound, the contact roller 25 rotates while making contact with the outer circumferential surfaces of the packages P supported by the upper bobbin holder 24. Because of this, the contact roller 25 applies a contact pressure to the outer circumferential surfaces of the packages P which are being wound and adjusts the shape of each package P.

The contact roller motor 32 is configured to transmit power to the contact roller 25 via a coupling (not illustrated), and to rotationally drive the contact roller 25. As shown in FIG. 1, the contact roller motor 32 is attached to a front end portion of the contact roller 25.

The fan 34 is provided in front of the contact roller motor 32. The fan 34 is configured to send cooling wind to the contact roller motor 32. The fan 34 is rotationally driven by a fan motor 33 (see FIG. 3). The fan 34 may be integrated with the fan motor 33.

As shown in FIG. 1, the front cover 26 is provided at a front end portion of the supporting body 20b. The front cover 26 is provided with an input unit 27 (see FIG. 3) for allowing an operator to input an instruction into the yarn winder 4. The input unit 27 is formed of, e.g., an operation button and a touch panel. For example, the front cover 26 is provided for at least partially covering the constituent features of the yarn winder 4. In the present embodiment, the front cover 26 has a function of at least partially covering and protecting the contact roller motor 32, a circuit board (not illustrated) which is electrically connected to the input unit 27, etc. The front cover 26 supports the fan 34.

The controller 29 includes an unillustrated CPU, ROM, RAM, etc. The controller 29 is configured to control the sections of the yarn winder 4 by means of the CPU, based on a program stored in the ROM. As shown in FIG. 3, the controller 29 is electrically connected to each winding motor 31, the contact roller motor 32, the fan motor 33, etc. Each winding motor 31 is connected to the controller 29 via an inverter 31a. The inverter 31a is able to adjust the rotation speed of the winding motor 31. The contact roller motor 32 is connected to the controller 29 via an inverter 32a (a first rotation speed adjuster of the present invention). The inverter 32a is able to adjust the rotation speed of the contact roller motor 32. The fan motor 33 is connected to the controller 29 via an inverter 33a (a second rotation speed adjuster of the present invention). The inverter 33a is able to adjust the rotation speed of the fan motor 33.

In the yarn winder 4 structured as described above, when the upper bobbin holder 24 is rotationally driven, the yarns Y traversed by the traverse guides 22 are wound onto the bobbins B. As a result, the packages P are formed. While the packages P are being formed, the contact roller 25 is rotationally driven by the contact roller motor 32 so as to apply the contact pressure to the outer circumferential surfaces of the packages P. As a result, the shape of each package P is adjusted. When the formation of the packages P is completed, the turret 23 rotates to switch over the upper and lower positions of the two bobbin holders 24. As a result, the bobbin holder 24 having been at the lower position is moved to the upper position. This allows the yarns Y to be wound onto the bobbins B attached to the bobbin holder 24 having been moved to the upper position, to form packages P again. Meanwhile, the bobbin holder 24 to which the fully-wound packages P are attached is moved to the lower position. The fully-wound packages P are then collected by, e.g., a package collector (not illustrated).

### (Controller)

The following will detail the controller 29. The controller 29 is able to adjust the rotation speed of each winding motor 31 configured to rotationally drive the bobbin holder 24 by means of the inverter 31a, so as to control the rotation speed of the bobbin holder 24. The controller 29 is able to adjust the rotation speed of the contact roller motor 32 configured to rotationally drive the contact roller 25 by means of the inverter 32a, so as to control the rotation speed of the contact roller 25. The controller 29 is able to adjust the rotation speed of the fan motor 33 configured to rotationally drive the fan 34 by means of the inverter 33a, so as to control the rotation speed of the fan 34.

As shown in FIG. 3, the controller 29 includes a storage unit 30. The storage unit 30 stores associated information obtained by associating the suitable rotation speed of the fan 34 for cooling the contact roller motor 32 with the winding speed of winding the yarns Y. The storage unit 30 includes, e.g., an RAM or a hard disk.

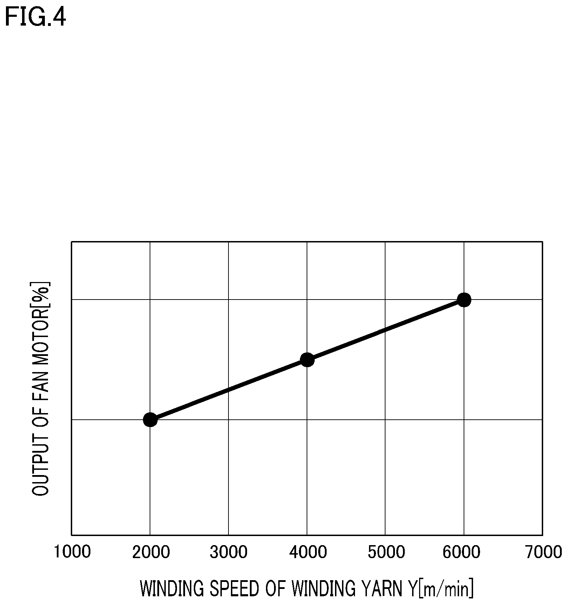

FIG. 4 shows an example of the associated information. FIG. 4 is a graph showing the relationship between the magnitude of output of the fan motor 33 (the rotation speed of the fan 34) and the winding speed of winding the yarns Y. In the example of FIG. 4, the output of the fan motor 33 increases proportionally to the winding speed of winding the yarns Y. The associated information of the present embodiment is information indicating that, the higher the winding speed of winding the yarns Y is, the higher the rotation speed of the fan 34 is. The associated information stored in the controller 29 may be a computational function or a table.

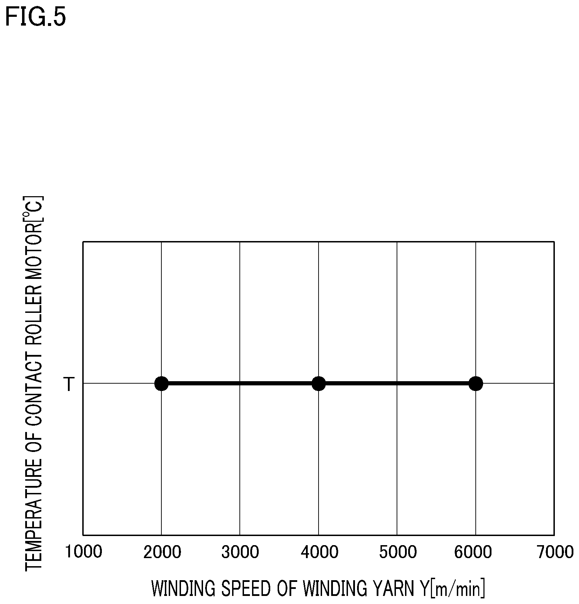

The rotation speed of the contact roller 25 depends on the winding speed of winding the yarns Y. The higher the increase in the winding speed of winding the yarns Y is, the higher the rotation speed of the contact roller 25 needs to be. The higher the rotation speed of the contact roller 25 is, the more likely an amount of heat generated at the contact roller motor 32 is to be large. In this regard, the contact roller motor 32 is configured to rotationally drive the contact roller 25. The higher the rotation speed of the fan 34 is, the larger the air volume of the fan 34 is. As a result, cooling capability is enhanced. Therefore, as shown in FIG. 5, even when the winding speed of winding the yarns Y is high, the temperature of the contact roller motor 32 can be maintained to be constant substantially at an optimal temperature T by increasing the rotation speed of the fan 34 in accordance with the increase in the winding speed of winding the yarns Y and based on the associated information.

The relationship between the winding speed of winding the yarns Y and the magnitude of output of the fan motor 33 (the rotation speed of the fan 34) may not be proportional to each other. For example, only when the winding speed of winding the yarns Y is within a predetermined range, the controller 29 may perform control so that, the higher the winding speed of winding the yarns Y is, the higher the rotation speed of the fan 34 is. That is, when the winding speed of winding the yarns Y is equal to or higher than, e.g., a first predetermined value, the controller 29 may perform control so that, the higher the winding speed of winding the yarns Y is, the higher the rotation speed of the fan 34 is. Alternatively, when the winding speed of winding the yarns Y is equal to or lower than, e.g., a second predetermined value, the controller 29 may perform control so that, the higher the winding speed of winding the yarns Y is, the higher the rotation speed of the fan 34 is.

When the yarns Y are wound, the controller 29 controls the rotation speed of the bobbin holder 24, that of the contact roller 25, and that of the fan 34 in accordance with the winding speed of winding the yarns Y. The winding speed of winding the yarns Y changes depending on the type of the wound yarns Y, etc. The winding speed of winding the yarns Y is set by the operator. For example, the operator operates the input unit 27 provided at the front cover 26 so as to input the winding speed of winding the yarns Y. The input of winding speed of winding the yarns Y may be made into a device such as a PC connected to the yarn winder 4 wirelessly or by cable, a tablet terminal, etc.

The controller 29 is configured to control the rotation speed of the bobbin holder 24 so that, e.g., the circumferential speed of the packages P supported by the bobbin holder 24 is identical with the winding speed of winding the yarns Y, which is input into the input unit 27. The controller 29 is configured to control (first process) the rotation speed of the contact roller 25 so that, e.g., the circumferential speed of the contact roller 25 is identical with the winding speed of winding the yarns Y, which is input into the input unit 27. In yarn threading which is performed before the winding of the yarns Y starts, the controller 29 may control the rotation speed of the contact roller 25 to be a speed which is set in advance for the yarn threading. The rotation speed of the contact roller 25 in the yarn threading is lower than that in the winding of the yarns Y.

The controller 29 is configured to control (second process) the rotation speed of the fan 34 based on the winding speed of winding the yarns Y and the associated information stored in the storage unit 30. In this regard, the winding speed of winding the yarns Y is input into the input unit 27. That is, this control is performed so that the rotation speed of the fan 34 becomes a rotation speed corresponding to the winding speed of winding the yarns Y input into the input unit 27 in the associated information shown in FIG. 4. That is, in the present embodiment, the controller 29 is configured to perform control so that, the higher the winding speed of winding the yarns Y is, the higher the rotation speed of the fan 34 is.

The controller 29 is configured to decide the timing for starting the rotation of the fan 34, based on the timing for causing the contact roller motor 32 to start the rotation of the contact roller 25. In the present embodiment, the controller 29 is configured to start the rotation of the contact roller 25 and that of the fan 34 at the same time. For example, the controller 29 may start the rotation of the fan 34 after predetermined time elapses from when the rotation of the contact roller 25 is started.

The controller 29 is configured to decide the timing for starting the above-described second process regarding the rotation speed of the fan 34, based on the timing for starting the above-described first process regarding the rotation speed of the contact roller 25. In the present embodiment, the controller 29 is configured to start the first process and the second process at the same time. For example, the controller 29 may start the second process after predetermined time elapses from when the first process is started.

When the rotation of the contact roller 25 is started as the winding of the yarns Y is started, the timing for starting the rotation of the contact roller 25 is the same as that for starting the first process. Furthermore, when the contact roller 25 is rotated in the yarn threading which is performed before the winding of the yarns Y starts, the timing for starting the first process is later than the timing for starting the rotation of the contact roller 25.

The controller 29 is configured to decide the timing for stopping the rotation of the fan 34, based on the timing for causing the contact roller motor 32 to stop the rotation of the contact roller 25. In the present embodiment, the controller 29 is configured to stop the rotation of the contact roller 25 and that of the fan 34 at the same time. For example, the controller 29 may stop the rotation of the fan 34 after predetermined time elapses from when the rotation of the contact roller 25 is stopped. The controller 29 may stop the rotation of the fan 34 before, by predetermined time, the timing for stopping the rotation of the contact roller 25.

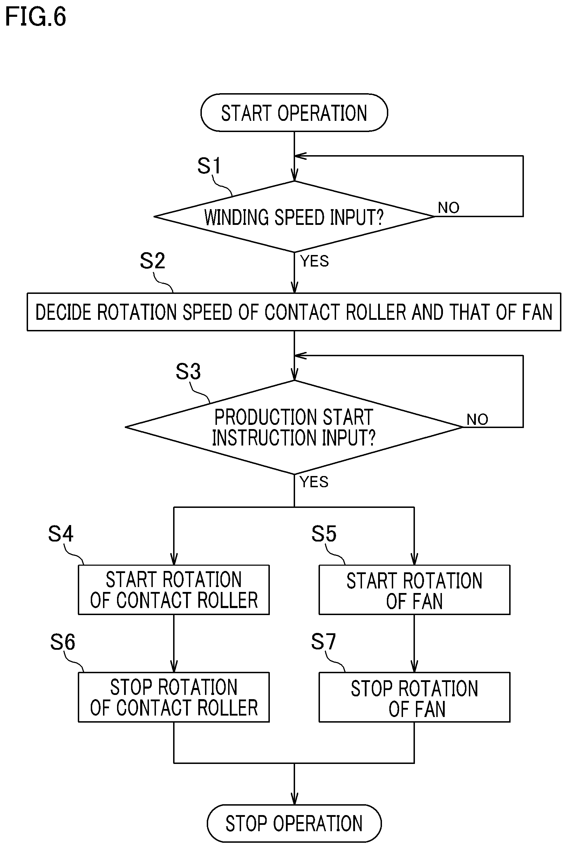

The following will describe an example of a process performed by the controller 29 when the yarns Y are produced by the yarn winder 4, with reference to FIG. 6. The following describes a case where the contact roller 25 starts rotating when the yarns Y start to be wound (the contact roller 25 does not rotate in the yarn threading).

To begin with, the controller 29 determines whether the winding speed of winding the yarns Y is input by the operator (S1). The determination in S1 is repeatedly performed until it is determined that the winding speed of winding the yarns Y is input. When it is determined that the winding speed of winding the yarns Y is input (YES in S1), the rotation speed of the contact roller 25 and that of the fan 34 are decided based on the input winding speed of winding the yarns Y (S2). At this time, the controller 29 decides the rotation speed of the contact roller 25 so that, e.g. the circumferential speed of the contact roller 25 is identical with the winding speed of winding the yarns Y. Furthermore, the controller 29 decides the rotation speed of the fan 34 based on the associated information stored in the storage unit 30.

Subsequently, the controller 29 determines whether an instruction to start producing the yarns Y (a production start instruction) is input by the operator (S3). The production start instruction is input into, e.g., the input unit 27. The determination in S3 is repeatedly performed until it is determined that the production start instruction of the yarns Y is input. When it is determined that the production start instruction of the yarns Y is input (YES in S3), the controller 29 starts the rotation of the contact roller 25 at suitable timing by starting the rotation of the bobbin holder 24, performing the yarn threading for the bobbins B, etc. (S4). The controller 29 starts the rotation of the fan 34 at the same time as the start of rotation of the contact roller 25 (S5). At this time, the controller 29 performs control so that the rotation speed of the contact roller 25 and that of the fan 34 become rotation speeds having been decided in S2. After that, when the production of the yarns Y ends, the controller 29 stops the rotation of the contact roller 25 (S6). The controller 29 stops the rotation of the fan 34 at the same time as the stop of rotation of the contact roller 25 (S7).

### (Characteristics of Embodiment)

As described above, the yarn winder 4 of the present embodiment is configured to wind each yarn Y onto a bobbin B so as to form a package P. The yarn winder 4 includes: each bobbin holder 24 to which the bobbin B is attached; the contact roller 25 configured to apply the contact pressure to the outer circumferential surface of the package P; the contact roller motor 32 configured to rotationally driven the contact roller 25; the inverter 32a configured to adjust the rotation speed of the contact roller motor 32; the fan 34 configured to send the cooling wind to the contact roller motor 32; the fan motor 33 configured to rotationally drive the fan 34; the inverter 33a configured to adjust the rotation speed of the fan motor 33; the input unit 27 into which the winding speed of winding the yarn Y is able to be input; and the controller 29. When the yarn Y is wound, the controller 29 controls the inverter 32a based on the winding speed of winding the yarn Y so as to control the rotation speed of the contact roller 25 (first process) and controls the inverter 33a based on the winding speed of winding the yarn Y so as to control the rotation speed of the fan 34 (second process). In this regard, the winding speed of winding the yarn Y is input into the input unit 27.

With this arrangement, when the yarn Y is wound, the controller 29 controls the rotation speed of the contact roller 25 based on the winding speed of winding the yarn Y input into the input unit 27. That is, the rotation speed of the contact roller 25 depends on the winding speed of winding the yarn Y, and an amount of heat generated at the contact roller motor 32 changes depending on the winding speed of winding the yarn Y. Furthermore, the controller 29 controls the rotation speed of the fan 34 based on the winding speed of winding the yarn Y input into the input unit 27. It is therefore possible to appropriately control the rotation speed (air volume) of the fan 34 in consideration of the winding speed of winding the yarn Y, which relates to an amount of heat generated at the contact roller motor 32. As a result, while wasteful electric power consumption is suppressed, the contact roller motor 32 is preferably cooled. The rotation speed of the fan 34 for cooling the contact roller motor 32 does not directly relate to the quality of the yarn Y. Therefore, in the known art, the rotation speed of the fan 34 has not been controlled in accordance with the winding speed of winding the yarn Y.

In the yarn winder 4 of the present embodiment, the controller 29 is configured to decide the timing for starting the rotation of the fan 34, based on the timing for causing the contact roller motor 32 to start the rotation of the contact roller 25. Therefore, irrespective of the start of rotation of the contact roller 25, the wasteful electric power consumption is suppressed as compared to a case where the fan 34 starts rotating before the contact roller 25 starts rotating.

In the yarn winder 4 of the present embodiment, the controller 29 is configured to decide the timing for starting the second process regarding the rotation speed of the fan 34 based on the timing for starting the first process regarding the rotation speed of the contact roller 25. It is therefore possible to reliably suppress heat generated at the contact roller motor 32 in the winding of the yarn Y.

In the yarn winder 4 of the present embodiment, the controller 29 is configured to decide the timing for stopping the rotation of the fan 34 based on the timing for causing the contact roller motor 32 to stop the rotation of the contact roller 25. Therefore, irrespective of the stop of rotation of the contact roller 25, the wasteful electric power consumption is suppressed as compared to a case where the fan 34 rotates even after the contact roller 25 stops rotating.

In the yarn winder 4 of the present embodiment, the controller 29 is configured to perform control so that, the higher the winding speed of winding the yarn Y is, the higher the rotation speed of the fan 34 is. The higher the winding speed of winding the yarn Y is, the higher the rotation speed of the contact roller 25 needs to be. The higher the rotation speed of the contact roller 25 is, the more likely an amount of heat generated at the contact roller motor 32 is to be large. In this regard, the contact roller motor 32 is configured to rotationally drive the contact roller 25. The higher the rotation speed of the fan 34 is, the larger the air volume of the fan 34 is. With this arrangement, cooling capability is enhanced. In the present arrangement, the larger the amount of the heat generated at the contact roller motor 32 is, the higher the cooling capability of the fan 34 is. As a result, while wasteful electric power consumption is reliably suppressed, the contact roller motor 32 is effectively cooled.

The yarn winder 4 of the present embodiment includes the front cover 26 configured to at least partially cover the contact roller motor 32, and the fan 34 is attached to the front cover 26. It is therefore possible to provide the fan 34 in the vicinity of the contact roller motor 32 so as to preferably cool the contact roller motor 32.

The embodiment of the present invention is described hereinabove. However, the specific structure of the present invention shall not be interpreted as to be limited to the above described embodiment. The scope of the present invention is defined not by the above embodiment but by claims set forth below, and shall encompass the equivalents in the meaning of the claims and every modification within the scope of the claims.

In the embodiment above, the controller 29 is configured to decide the timing for starting the rotation of the fan 34, based on the timing for causing the contact roller motor 32 to start the rotation of the contact roller 25. However, the disclosure is not limited to this. The controller 29 may be configured to start the rotation of the fan 34 before the start of rotation of the contact roller 25, irrespective of the start of rotation of the contact roller 25.

In the embodiment above, the controller 29 is configured to decide the timing for starting the second process regarding the rotation speed of the fan 34 based on the timing for starting the first process regarding the rotation speed of the contact roller 25. However, the disclosure is not limited to this. For example, when (i) the yarn threading is performed before the winding of the yarn Y starts and (ii) the contact roller 25 rotates at a speed for the yarn threading, the controller 29 may start the second process as the contact roller 25 starts rotating at the speed for the yarn threading.

In the embodiment above, the controller 29 is configured to decide the timing for stopping the rotation of the fan 34 based on the timing for causing the contact roller motor 32 to stop the rotation of the contact roller 25. However, the disclosure is not limited to this. The controller 29 may be configured to rotate the fan 34 even after the stop of rotation of the contact roller 25, irrespective of the stop of rotation of the contact roller 25.

In the embodiment above, the controller 29 is configured to perform control so that, the higher the winding speed of winding the yarn Y is, the higher the rotation speed of the fan 34 is. However, the disclosure is not limited to this. For example, the controller 29 may be configured to perform control so that, the higher the winding speed of winding the yarn Y is, the lower the rotation speed of the fan 34 is.

In the embodiment above, the inverter 32a, 33a is used as a device configured to adjust the rotation speed of the contact roller motor 32 or the fan motor 33. However, the disclosure is not limited to this. For example, a speed controller, etc. may be used as a device configured to adjust the rotation speed of the contact roller motor 32 or the fan motor 33.

In the embodiment above, the fan 34 is attached to the front cover 26. However, an attachment position of the fan 34 is not limited to this.

In the embodiment above, the yarn winder 4 includes the two bobbin holders 24. However, the number of the bobbin holders 24 is not limited to this. The packages P are supported by each bobbin holder 24. However, the disclosure is not limited to this. Each bobbin holder 24 may support one package P and the contact roller 25 may be configured to apply the contact pressure to the one package P.

In the embodiment above, the controller 29 provided at the yarn winder 4 is configured to control the inverter 32a and the inverter 33a. However, the disclosure is not limited to this. For example, a controller configured to control the entire take-up apparatus 1 may be configured to control the inverter 32a and the inverter 33a.

## Claims

1. A yarn winder (4) configured to wind a yarn (Y) onto a bobbin (B) so as to form a package (P), the yarn winder (4) comprising:
a bobbin holder (24) to which the bobbin (B) is attached;
a contact roller (25) configured to apply a contact pressure to an outer circumferential surface of the package (P);
a contact roller motor (32) configured to rotationally drive the contact roller (25);
a first rotation speed adjuster (32a) configured to adjust the rotation speed of the contact roller motor (32);
a fan (34) configured to send cooling wind to the contact roller motor (32);
a fan motor (33) configured to rotationally drive the fan (34);
a second rotation speed adjuster (33a) configured to adjust the rotation speed of the fan motor (33);
an input unit (27) into which the winding speed of winding the yarn (Y) is able to be input; and
a controller (29), and
the controller (29) being configured to perform:
a first process of controlling the rotation speed of the contact roller (25) by controlling the first rotation speed adjuster (32a) based on the winding speed of winding the yarn (Y) in the winding of the yarn (Y), the winding speed of winding the yarn (Y) being input into the input unit (27); and
a second process of controlling the rotation speed of the fan (34) by controlling the second rotation speed adjuster (33a) based on the winding speed of winding the yarn (Y), the winding speed of winding the yarn (Y) being input into the input unit (27).

2. The yarn winder (4) according to claim 1, wherein, the controller (29) is configured to decide timing for starting the rotation of the fan (34) based on timing for causing the contact roller motor (32) to start the rotation of the contact roller (25).

3. The yarn winder (4) according to claim 1 or 2, wherein, the controller (29) is configured to decide timing for starting the second process based on timing for starting the first process.

4. The yarn winder (4) according to any one of claims 1 to 3, wherein, the controller (29) is configured to decide timing for stopping the rotation of the fan (34) based on timing for causing the contact roller motor (32) to stop the rotation of the contact roller (25).

5. The yarn winder (4) according to any one of claims 1 to 4, wherein, the controller (29) is configured to perform control in the second process so that, the higher the winding speed of winding the yarn (Y) is, the higher the rotation speed of the fan (34) is.

6. The yarn winder (4) according to any one of claims 1 to 5, further comprising a cover (26) configured to at least partially cover the contact roller motor (32), wherein,
the fan (34) is attached to the cover (26).
